Europäisches Patentamt

European Patent Office

Office européen des brevets

(19)

(11) Veröffentlichungsnummer: **0 187 304 B1**

## (12) EUROPÄISCHE PATENTSCHRIFT

(45) Veröffentlichungstag der Patentschrift: **08.04.92**

(21) Anmeldenummer: **85115861.8**

(22) Anmeldetag: **12.12.85**

(51) Int. Cl.5: **G02C 11/00**, G02C 5/00, A61N 2/08

(54) **Brillengestell.**

(30) Priorität: **24.12.84 DE 3447371**

(43) Veröffentlichungstag der Anmeldung:
**16.07.86 Patentblatt 86/29**

(45) Bekanntmachung des Hinweises auf die
Patenterteilung:
**08.04.92 Patentblatt 92/15**

(84) Benannte Vertragsstaaten:
**AT BE CH DE FR GB IT LI LU NL SE**

(56) Entgegenhaltungen:
DE-A- 1 797 366     DE-A- 2 546 767
DE-A- 3 209 508     DE-U- 8 434 682
FR-A- 2 501 508     GB-A- 1 270 406
US-A- 3 921 620

(73) Patentinhaber: **Steiner, Walter**
**Säntisstrasse 52**
**CH-8311 Brütten(CH)**

(72) Erfinder: **Steiner, Walter**
**Säntisstrasse 52**
**CH-8311 Brütten(CH)**

(74) Vertreter: **Rottmann, Maximilian R.**
**c/o Rottmann + Ouehl AG Glattalstrasse 37**
**CH-8052 Zürich(CH)**

Rank Xerox (UK) Business Services

## Beschreibung

Die vorliegende Erfindung bezieht sich auf ein Brillengestell und hat zum Ziel, das Wohlbefinden des Trägers des Brillengestells zu steigern.

Es ist bekannt, dass schwache magnetische Felder das Wohlbefinden des Menschen positiv beeinflussen können. Überraschend wurde nun gefunden, dass auch schwache elektrische Felder das Wohlbefinden des Menschen positiv beeinflussen können. Insbesondere im Bereich des Kopfes und dabei ganz besonders in der Gegend Stirn-Nasenwurzel sowie in der Gegend des Ohransatzes können solche Felder eine beruhigende und entspannende Wirkung entfalten.

Die Erfindung nützt diese Erkenntnis dadurch aus, dass zumindest einzelne Bereiche des Brillengestells aus einem Werkstoff mit einer permanenten elektrischen Polarisation bestehen, die eine externe elektrische Feldverteilung zur Folge hat.

Im Fall eines aus Kunststoff bestehenden Brillengestells können einzelne Bestandteile aus einem Elektret-Werkstoff bestehen, einem Material, das bekanntlich eine permanente elektrische Polarisation besitzt, die eine externe elektrische Feldverteilung zur Folge hat.

Es besteht natürlich auch die Möglichkeit, ein normales Brillengestell zu verwenden und an einzelnen Stellen des Gestells Körper zu befestigen, die aus einem Werkstoff mit einer permanenten elektrischen Polarisation bestehen, die eine externe elektrische Feldverteilung zur Folge hat. Zweckmässigerweise sind diese Körper am Brillengestell auswechselbar, beispielsweise ansteckbar oder anklebbar, am Gestell befestigt.

Eine zweckmässige Ausführungsform kann darin gesehen werden, dass die beiden Bügelenden und/oder der Nasenbügel aus einem Elektret-Werkstoff hergestellt sind bzw. ist.

Wenn die Wirkung des elektrischen Felds nur zeitweise erwünscht ist, können die genannten Körper zweckmässigerweise durch an den Bügelenden und/oder am Nasenbügel angebrachte Plättchen oder Hohlkörper aus einem Elektret-Werkstoff gebildet sein.

Im folgenden werden Ausführungsbeispiele des erfindungsgemässen Brillengestells, unter Bezugnahme auf die beiliegenden Zeichnungen, näher erläutert. Im einzelnen zeigen:

Fig. 1 eine Ansicht eines ersten Ausführungsbeispiels eines Brillengestells,

Fig. 2 eine Ansicht eines zweiten Ausführungsbeispiels eines Brillengestells, und

Fig. 3 Ansichten von Steckkörpern für ein Brillengestell aus Elektret-Werkstoff.

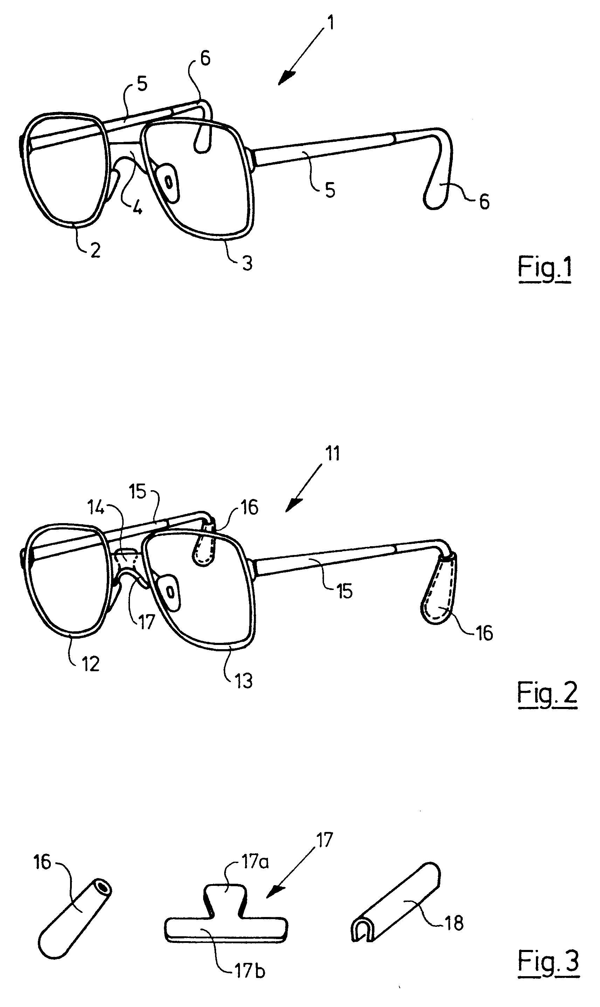

Aus Fig. 1 ist ein Brillengestell 1 zu sehen, welches je einen Tragrahmen 2 und 3 für das rechte und linke Brillenglas aufweist. Die beiden Tragrahmen sind durch einen Nasenbügel 4 miteinander verbunden. An den äusseren Seitenteilen der beiden Tragrahmen 2 und 3 ist je ein Bügel 5 in bekannter Weise mittels eines Scharniers schwenkbar befestigt.

Im dargestellten Ausführungsbeispiel kann das Brillengestell 1 aus Kunststoff bestehen. In diesem Fall ist der Nasenbügel 4 aus einem Werkstoff mit einer permanent elektrischen Polarisation, z.B. aus einem geeigneten Elektretmaterial hergestellt. Die permanente elektrische Polarisation hat eine externe elektrische Feldverteilung zur Folge. Die Endbereiche 6 der beiden Bügel 5 können aus demselben, permanent elektrisch polarisierten Werkstoff bestehen.

Diese elektrische Feldverteilung wirkt einerseits im Bereich der Nasenwurzel und andererseits im Bereich des Ohransatzes, an Stellen also, wo eine besonders ausgeprägte, beruhigende und entspannende Wirkung der Felder auf den Träger der Brille zu erwarten ist.

Selbstverständlich ist es auch möglich, entweder nur den Nasenbügel 4 oder nur die Bügelendbereiche 6 aus einem Elektret-Werkstoff herzustellen.

In Fig. 2 ist ein weiteres Ausführungsbeispiel eines Brillengestells 11 zu sehen. Hier handelt es sich um ein ganz normales Gestell aus einem geeigneten Kunststoff oder Metall, umfassend wiederum zwei Tragrahmen 12 und 13 für die beiden Gläser, einen Nasenbügel 14 sowie zwei Tragbügel 15. Der Nasenbügel 14 ist aber hier mit einem z.B. aus einem Elektret-Werkstoff bestehenden Plättchen 17 versehen, das am Nasenbügel 14 angeklebt oder auf diesen aufgesteckt ist. Die Endbereiche der beiden Tragbügel 15 sind mit einem übergestülpten Körper 16 z.B. aus einem Elektret-Werkstoff versehen. Diese Lösung gestattet es einerseits, jedes normale, handelsübliche Brillengestell nachträglich mit den Elektret-Elementen auszustatten, ermöglicht aber andererseits, nach Bedarf, durch den Benutzer selbst auswechselbar, nur den Nasenbügel 14 oder nur die Enden der Bügel 15 oder keines von beiden mit den genannten Elementen zu versehen.

In Fig. 3 schliesslich sind drei Beispiele von solchen Elementen dargestellt, die aus einem Werkstoff mit einer permanenten elektrischen Polarisation bestehen, die eine externe elektrische Feldverteilung zur Folge hat. In Fig. 3 links ist ein über das Ende eines Brillengestell-Bügels aufstülpbarer Elektret-Körper 16 dargestellt, der vorzugsweise aus einem elastisch nachgiebigen Elektret-Werkstoff besteht. In der Mitte ist ein Nasenbügel-Plättchen 17 zu sehen; der längliche Teil 17b wird dabei unter den Nasenbügel geklebt, während der Fortsatz 17a zur weiteren Fixierung und ggf. zur Verbesserung des Tragkomforts an der Innenseite des Bügels festgeklebt wird. Auch hier besteht das Plättchen vorzugsweise aus einem weichen, elastisch nachgiebigen Elektret-Werkstoff. In Fig. 3 rechts schliesslich ist ein im Querschnitt U-förmiges, längliches Element 18 dargestellt, welches zum Aufklemmen auf den Bügel 5 bzw. 15 bestimmt ist. Es kann aus einem Elektret-Werkstoff bestehen und bewirkt so die Einwirkung eines elektrischen Felds im Schläfenbereich eines Brillenträgers.

Im Rahmen der Erfindung sind natürlich noch zahlreiche weitere Varianten möglich. So können die genannten Ansteck- oder Anklebkörper unterschiedliche Gestalt aufweisen, bei Brillengestellen mit zwei schwenkbaren Nasenstützplatten im Bereich des Nasenbügels können diese Platten ggf. auch aus einem Elektret-Werkstoff bestehen, oder es kann ein Aufstülpkörper auf diese Nasenplatten aus einem weichen, elastisch nachgiebigen Elektret-Werkstoff vorgesehen sein.

**Patentansprüche**

1. Brillengestell, dadurch gekennzeichnet, dass zumindest einzelne Teilbereiche (4, 6) des Gestells aus einem Werkstoff mit einer permanenten elektrischen Polarisation bestehen, die eine externe elektrische Feldverteilung zur Folge hat, und/oder dass an einzelnen Stellen des Gestells (11) Körper (16, 17, 18) mit einer permanenten elektrischen Polarisation befestigt sind, die eine externe elektrische Feldverteilung zur Folge hat.

2. Brillengestell nach Anspruch 1, dadurch gekennzeichnet, dass die genannten Körper (16, 17, 18) am Gestell (11) angeklebt oder angesteckt sind.

3. Brillengestell nach Anspruch 1, dadurch gekennzeichnet, dass einzelne Teile (4, 6) des Gestells (1) aus einem Elektret-Werkstoff bestehen.

4. Brillengestell nach Anspruch 1 oder 2, dadurch gekennzeichnet, dass die genannten Körper (16, 17, 18) aus einem Elektret-Werkstoff bestehen.

5. Brillengestell nach Anspruch 3, dadurch gekennzeichnet, dass die beiden Bügelenden (6) und/oder der Nasenbügel (4) aus einem Elektret-Werkstoff hergestellt sind bzw. ist.

6. Brillengestell nach Anspruch 1 oder 2, dadurch gekennzeichnet, dass die genannten Körper durch an den Bügelenden und/oder am Nasenbügel angebrachte Plättchen (17) bzw. Hüllkörper (16, 18) aus einem Elektret-Werkstoff gebildet sind.

**Claims**

1. Spectacle frame, characterised in that at least individual partial regions (4, 6) of the frame consist of a material with a permanent electrical polarization, which results in an external electrical field distribution, and/or that at individual points of the frame (11) members (16, 17, 18) with a permanent electrical polarization are attached, which results in an external electrical field distribution.

2. Spectacle frame according to Claim 1, characterised in that the said members (16, 17, 18) are stuck or fitted to the frame (11).

3. Spectacle frame according to Claim 1, characterised in that individual parts (4, 6) of the frame (1) consist of an electret material.

4. Spectacle frame according to Claim 1 or 2, characterised in that the said members (16, 17, 18) consist of an electret material.

5. Spectacle frame according to Claim 3, characterised in that the two ends of the arms (6) and/or the bridge (4) are/is produced from an electret material.

6. Spectacle frame according to Claim 1 or 2, characterised in that the said members are formed by small plates (17) or sheathing members (16, 18) of an electret material, located on the ends of the arms and/or on the bridge.

**Revendications**

1. Monture de lunettes, caractérisée en ce qu'au moins des zones partielles particulières (4, 6) de la monture sont en une matière possédant une polarisation électrique permanente qui provoque une répartition du champ électrique extérieur et/ou en ce qu'en des emplacements particuliers de la monture (11), il est fixé des éléments (16, 17, 18) possédant une polarisation électrique permanente qui provoque une répartition du champ électrique extérieur.

2. Monture de lunettes suivant la revendication 1, caractérisée en ce que lesdits éléments (16, 17, 18) sont collés ou accrochés sur la monture (11).

3. Monture de lunettes suivant la revendication 1, caractérisée en ce que des parties particulières (4, 6) de la monture (1) sont en une matière du type électret.

4. Monture de lunettes suivant la revendication 1 ou 2, caractérisée en ce que lesdits éléments (16, 17, 18) sont en une matière du type électret.

5. Monture de lunettes suivant la revendication 3, caractérisée en ce que les deux extrémités (6) des branches et/ou l'arcade (4) sont en une matière du type électret.

6. Monture de lunettes suivant la revendication 1 ou 2, caractérisée en ce que lesdits éléments sont formés de plaquettes (17) ou d'éléments enveloppants (16, 18), en une matière du type électret, montés sur les extrémités des branches et/ou sur l'arcade.

Fig. 1

Fig. 2

Fig. 3